# EUROPEAN PATENT SPECIFICATION

(11) **EP 4 492 982 B1**
(45) Date of publication and mention of the grant of the patent: **07.10.2026**
(21) Application number: 23712356.7
(22) Date of filing: 10.03.2023
(51) Int. Cl.: A23B 4/023, A23B 4/28, A23B 4/32, A23L 13/70

(54) **DEVICE AND METHOD FOR THE PREPARATION OF FOODS**
GERÄT UND METHODE ZUR VORBEREITUNG VON LEBENSMITTELN
APPAREIL ET METHODE DE PREPARATION D'ALIMENTS

(30) Priority: 15.03.2022 IT 202200004997
(43) Date of publication of application: 22.01.2025
(73) Proprietor: 3RE-LAB S.R.L, 13900 Biella (IT)
(72) Inventor: FASAN, Gianni, 13843 PETTINENGO (BI) (IT)
(74) Representative: Vitillo, Giuseppe
(86) International application number: PCT/IB2023/052290
(87) International publication number: WO 2023/175456

(56) References cited:
- EP-A1- 0 114 176
- WO-A2-2011/008034
- WO-A2-2011/008034
- CN-A- 106 333 218
- CN-A- 106 333 218
- DE-C2- 19 621 701
- DE-C2- 19 621 701
- KR-A- 20080 081 141
- KR-A- 20080 081 141
- KR-Y1- 200 367 280
- KR-Y1- 200 367 280

## Description

### Technical field

The present invention relates to a device and a method for the preparation of foods, in particular meat, fish and vegetables.

### Technical background

A meat salting method is known in the food industry, wherein meat pieces are cured by leaving them completely covered with salt for several weeks.

One drawback of this process is that it takes much time to complete.

Prior art devices are disclosed in e.g., CN 106 333 218 A, WO 2011/008034 A2 and DE 196 21 701 C2.

### Summary of the invention

It is one object of the present invention to provide a device and a method capable of overcoming this and other drawbacks of the prior art while at the same time being simple and economical to carry out.

According to the present invention, this and other objects are achieved through a device, a kit and a method defined as follows:
A device for the preparation of foods, comprising:
- a container having a bottom and a lateral surface,
- a grid adapted to be removably placed into the container,
- a cover for closing the container with the grid therein,
- a presser coupled to the cover for pressing a content in the container,
- adjustment means configured for adjusting the insertion of the presser in the container,
characterized in that the adjustment means are also adapted to adjust the closing action of the cover (8) onto the container (2), and to close such cover (8). 1

A kit for the preparation of foods, comprising:
- a container having a bottom and a lateral surface,
- a grid adapted to be removably placed into the container,
- a cover for closing the container with the grid therein,
- a presser adapted to be mounted to the cover for pressing a content in the container,
- adjustment means configured for adjusting the insertion of the presser in the container,
characterized in that the adjustment means are also adapted to adjust the closing action of the cover (8) onto the container (2), and to close such cover (8). 1

A method for the preparation of foods, comprising the following steps:
- providing the above-defined device,
- inserting the food together with salt into the container on the grid,
- laying the presser, mounted to the cover, on the content of the container,
- exerting a first pressure on the content by means of the presser,
- after a predefined time interval, adjusting the pressure exerted on the content by the presser,
- extracting the food from the container.

The appended dependent claims define some preferred embodiments of the present invention that include some optional technical features.

### Brief description of the drawings

Further features and advantages of the present invention will become apparent in light of the following detailed description, provided merely as a non-limiting example with reference to the annexed drawings, wherein:
- Figure 1 is a perspective view of a device, in a closed condition, according to an illustrative embodiment of the present invention;
- Figure 2 is an exploded view of the device of Fig. 1;
- Figure 3 is a longitudinal section of the device of Fig. 1;
- Figure 4 is an exploded view of a device according to a different embodiment of the invention.

### Detailed description of the invention

With reference to the annexed drawings, a device 1 for the preparation of foods will be described, which comprises:
- a container 2 having a bottom 3 and a lateral surface 4,
   a grid 6 adapted to be removably placed into container 2,
- a cover 8 for closing container 2 with grid 6 therein,
- a presser 7 coupled to cover 8 for pressing a content in container 2,
- adjustment means configured for adjusting the insertion of presser 7 in container 2,
characterized in that the adjustment means are also adapted to adjust the closing action of the cover (8) onto the container (2), and to close such cover (8).

Preferably, container 2 is made of metal, e.g. steel (in particular, stainless steel). Grid 6 may be made of metal too, e.g. steel (in particular, stainless steel).

Preferably, grid 6 is adapted to be placed in proximity to the bottom of container 2. In particular, grid 6 is adapted to remain raised from bottom 3. By way of non-limiting example, bottom 3 is adapted to remain raised from grid 6by a distance of 1 to 10 cm or 2 to 5 cm, preferably 1.5 to 2.5 cm. Conveniently, there is at least one supporting member 9 for keeping grid 6 raised from bottom 3. Such supporting member 9 may be either removable or integral with grid 6 and/or with container 2.

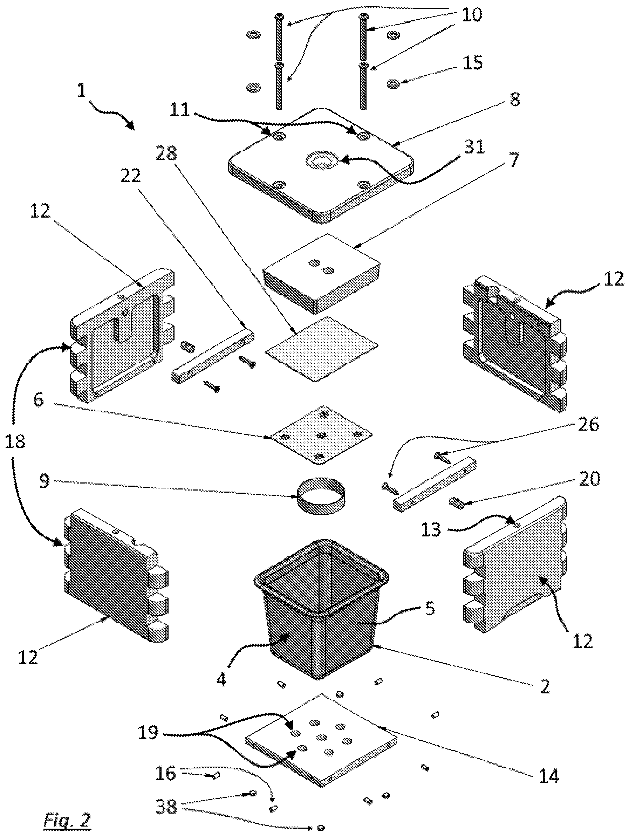

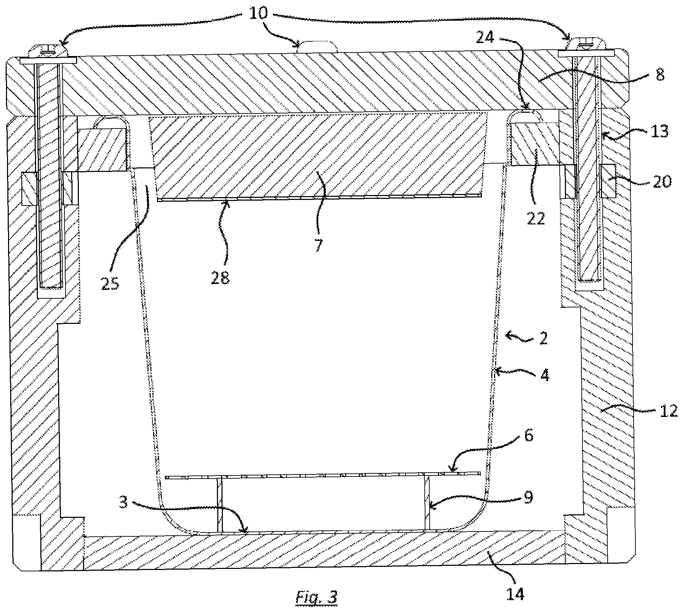

In the example, supporting member 9 is a ring (specifically, a cylindrical surface), which is conveniently mounted to grid 6 (in particular, by welding). In Figs. 2 and 3, the ring is interposed between bottom 3 of container 2 and grid 6. In this example, supporting member 9 is welded to grid 6.

According to some possible variants, supporting member 9 includes plates mounted in proximity to bottom 3. Alternatively, supporting members 9 may consist of, for example, pins. The gap between grid 6 and bottom 3 permits the accumulation of liquids that may be generated during the preparation of foods, thus avoiding any contact between such liquids and the food. This may occur, for example, when meat is cured with salt. Preferably, grid 6 is horizontal (when device 1 is resting on a horizontal surface).

The food and the salt, as well as any dressing, are intended to be laid onto grid 6, in particular according to one mode of operation of device 1 (specifically, for extracting liquids from the food), e.g. as shown in Fig. 2.

Grid 6 has a plurality of apertures or holes. In the example illustrated herein, such apertures are concentrated in some areas of grid 6, specifically in five areas: the four corners and the centre of grid 6. Alternatively, the apertures or holes of grid 6 may be arranged otherwise, e.g. evenly distributed.

In the example, lateral surface 4 of container 2 has flat sidewalls 5 (in particular, four sidewalls 5). In the example, such sidewalls 5 are slightly inclined relative to the vertical. Conveniently, bottom 3 of container 2 is flat. Preferably, grid 6 is flat. In the example, grid 6 is square, but it may be, depending on the shape of the container, rectangular, circular, polygonal, etc. In fact, the shape of container 2 may differ from the one shown herein; for example, it may have a circular, rectangular, etc. lateral surface 4.

According to the present invention, the adjustment means are also adapted to adjust the closing action of cover 8 onto container 2. Therefore, said adjustment means are adapted to close said cover 8. In fact, when presser 7 is mounted to cover 8 in a fixed position, said presser 7 and cover 8 move integrally. In particular, the adjustment means act upon cover 8 and are adapted to close said cover 8.

By acting upon the adjustment means, it is possible to adjust the pressure exerted by presser 7 on the content in container 2 when presser 7 is resting on such content. In the example shown herein, the adjustment means are useful to adjust the relative positions of the cover 8 and the container 2, and also to hold said cover 8 in the closed position. In particular, the adjustment means act upon the cover 8 and are adapted to close said cover 8.

According to one possible variant, the adjustment means comprise a rack-type system. For example, a rack mounted to cover 8 is driven by a toothed wheel mounted to container 2 or to the enclosure integral with said container 2. Further adjustment means may also be used, which may be *per* se known.

Conveniently, the adjustment means comprise screws 10. In the example there are four screws 10, in particular one per sidewall 5 of container 2. The adjustment means make it possible to open and close container 2 by means of cover 8.

In the example shown herein, device 1 has an enclosure external to container 2. In the example, the enclosure is made of wood, but it may be made of other materials as well, such as metal or polymer. In particular, the enclosure comprises a plurality of lateral panels 12 (which are flat in the example) and a base 14 (which is flat in the example). Base 14 is located in a position corresponding to bottom 3 of container 2. In the example, said bottom 3 rests on base 14. Lateral panels 12, four in this example, are located in positions corresponding to respective sidewalls 5 of container 2. Lateral panels 12 and base 14 are jointed to one another, particularly by interlocking

Conveniently, base 14 has one or more holes 15. Holes 19 improve the thermal exchange, for better cooling of container 2 (and the content thereof) when device 1 is put in a refrigerator.

In the example, lateral panels 12 are mounted to base 14 by means of pins 16 inserted in respective seats in the lateral panels and in base 14. Furthermore, such lateral panels 12 are provided with a joint system for their mutual connection. In the example, each panel 12 has tongues 18 adapted to fit between tongues 18 of other panels 12. Tongues 18 create complementary protrusions and recesses. Tongues 18 are located at both lateral ends of each panel 12. Optionally, support feet 38, e.g. made of rubber, are provided on the underside of base 14. According to some possible variants, the angular joints between sidewalls 12 may have several different shapes, and the two parts to be connected may be milled in different ways. Moreover, the parts of enclosure, e.g. sidewalls 12, may be mounted in several ways that may be *per* se known, e.g. screws, bolts or through pins.

Screws 10 are adapted to engage into the lateral panels 12. To receive screws 10, lateral panels 12 are conveniently provided with suitable threads. In the example, lateral panel 12 includes a threaded bushing 20 into which screw 10 is adapted to engage. Threaded bushing 20 is fixed to lateral panel 12. In the example, each screw 10 engages into a respective lateral panel 12, in particular via threaded bushing 20. As can be seen in Fig. 3, threaded bushing 20 is housed in a cavity of lateral panel 12. In particular, lateral panel 12 has a hole 13 (which in the example is vertical), into which the respective screw 10 is intended to be inserted in order to reach threaded bushing 20.

Therefore, screws 10 perform the function of constraining together, in an adjustable and removable manner, container 2 and cover 8. In the example, such constraint is an indirect one, since screws 10 engage with lateral panels 12, which are mounted to container 2. In particular, screws 10 run through suitable holes 11 in cover 8. Washers 15 may be interposed between screws 10 and cover 8. According to some possible variants, screws 10 may engage directly with container 2. In such variants, the enclosure may be omitted.

In the example, two bars 22 facing towards the inside of the enclosure are fixed to two lateral panels 12. Bars 22 rest against an upper edge 24 of container 2. Bars 22 are useful to hold container 2 in position within the enclosure. In particular, upper edge 24 rests on top of bars 22. In the example shown herein, only two lateral panels 12 have a respective bar 22, and such two lateral panels 12 are in opposite positions. Conveniently, screws 26 fasten bars 22 to lateral panels 12. According to some possible variants, at least some lateral panels 12 comprise protrusions adapted to abut on upper edge 24 to hold container 2 in position. Such protrusions operate in much the same way as bars 22.

In the preferred example, lateral panels 12, base 14, bars 22, presser 7, and cover 8 are made of wood.

Preferably, the presser 7 is removable from cover 8. For example, in cover 8 a seat is formed, in which the cover 8is housed; as an alternative, they 7, 8 are fitted to each other by *per* se known fastening means, such as screws or bolts. According to one possible variant, they 7 and 8 are made as one piece. In particular, the presser 7 has a parallelepiped shape.

Conveniently, a metal plate 28, e.g. made of stainless steel, is associated with the presser 7, facing towards the inside of container 2. Plate 28 covers the face of presser 7 intended to get in contact with the food in container 2. Plate 28 is useful to improve the hygiene of the device 1, especially when the presser 7 is made of wood. The plate 28 shown herein is flat.

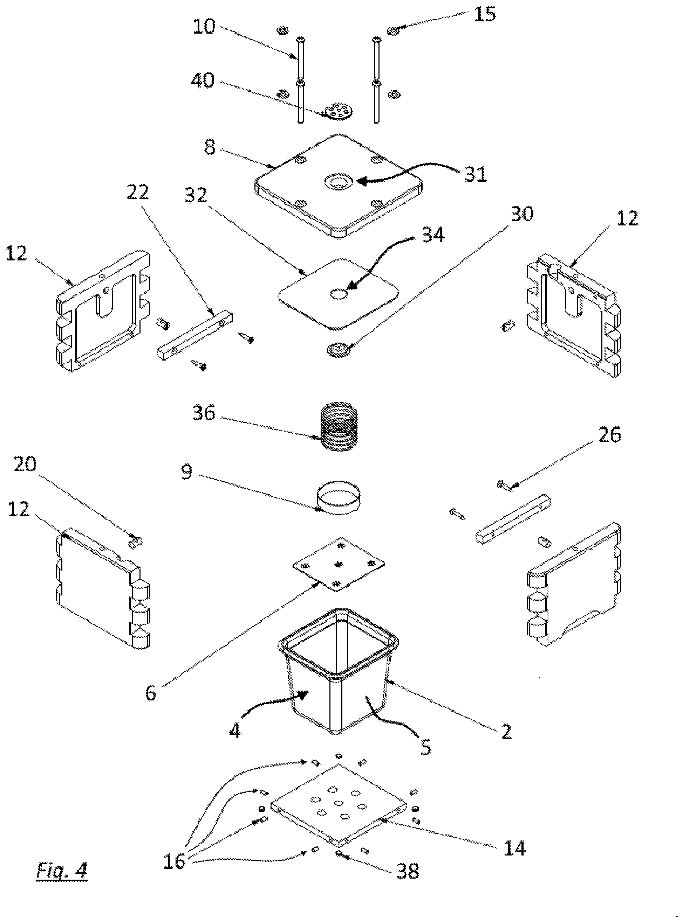

According to one possible variant of the invention shown in Fig. 4, device 1 can also be used as a food fermenter. In particular, device 1 has a valve 30 to selectively allow gas to flow from the inside of container 2 to an outside environment. Valve 30 is preferably a one-way valve that opens when the pressure in container 2 reaches a threshold value. In the example, valve 30 only permits gas outflow from container 2. Valve 30 allows fermentation gases forming in container 2 to flow out. Conveniently, valve 30 is made of polymeric material. In the example, valve 30 can be removed from device 1, particularly from cover 8.

In particular, cover 8 comprises an aperture or hole 31 to allow the gas to flow from container 2 to the outside and through valve 30. In the example, valve 30 is arranged on the face of cover 8 that faces towards the inside of container 2. Preferably, a gasket 32 ensures fluid tightness of cover 8 on container 2. When cover 8 is closing container 2, the gases in container 2 can only exit through valve 30 and aperture 31 in cover 8. In the example, valve 30 is inserted in a hole 34 of gasket 32. Gasket 32 shown herein extends from the top edges of container 2 to valve 30. In particular, gasket 32 has a planar shape. In the example, gasket 32 can be removed from device 1, particularly from cover 8.

Fig. 4 shows device 1 that can be used as a fermenter. In such an embodiment, presser 7 is absent (e.g. the user can remove it 7 from cover 8 for this very purpose). Conveniently, there is a returning means, in particular an elastic means (a spring 36 in the example) for pushing grid 6 towards bottom 3 of container 2. The illustrated elastic means acts upon cover 8 on one side and on grid 6 on the other side. the elastic means shown herein is intended to be placed into container 2.

In the example, a gas-permeable perforated cap 40 is mounted on an outer face of cover 8, covering aperture 31.

When device 1 is used as a fermenter (Fig. 4), compared with a device 1 used as a curing device (Fig. 2), grid 6 and supporting member 9 are installed in reverse order. In Fig. 2 supporting member 9 is interposed between grid 6 and bottom 3, whereas in Fig. 4 grid 6 is interposed between supporting member 9 and bottom 3. Therefore, in Fig. 4 grid 6 lies under supporting member 9. In this case, the special ring-shaped supporting member 9 is useful to hold spring 36 in position.

Therefore, according to some possible variants, device 1 can be used for curing foods and also for fermenting foods. In order to switch from one configuration to the other, the user needs to install and reinstall some elements. In fact, presser 7 is preferably removable from cover 8. In the embodiment illustrated herein, in order to switch to the configuration in which device 1 can be used as a fermenter, the user removes presser 7 from cover 8, turns supporting member 9 and grid 6 upside-down, installs valve 31 and the returning element (e.g. spring 36) and, if present, gasket 32. In order to return to the configuration of Fig. 2, the user performs the reverse steps.

During the fermentation process, grid 6 is adapted to, through the effect of the elastic means, maintain the content under fermentation within fermentation liquids. Therefore, the content under fermentation is interposed between grid 6 and bottom 3. According to one possible alternative, the elastic means (e.g. spring 36) is absent, and said content is pressed against bottom 3 by the weight of grid 6 alone.

The fermentation process may be *per* se known. For example, the foods are placed into container 2 along with salt, a liquid, and optionally sugar; additional liquid or solid or granular substances may be used in the fermentation process. The liquid may include water.

Fermentation preferably occurs at room temperature, e.g. 20-25 °C. Preferably, fermentation is applied to vegetables, although meat and fish may also be subjected to fermentation. Preferably, curing is applied to meat and fish.

According to one possible variant (not shown), presser 7 remains associated with cover 8, and device 1 can be used for both curing and fermenting purposes.

According to one possible variant (not shown), device 1 comprises an inflatable cushion (preferably made of rubber) interposed between bottom 3 of container 2 and the enclosure. In particular, the cushion is interposed between base 14 and bottom 3. The cushion is adapted to be inflated by means of an inflation system, e.g. a pump. The cushion is connected, preferably in a removable manner, to a pump, conveniently a manual pump. A tube connects the cushion to the pump for conveying air. For example, a hole in the enclosure permits the passage of said tube. Said cushion positioned under container 2 raises the container 2 and the content thereof towards presser 7, thus exerting a pressing action. Thanks to the inflated cushion, presser 7 will tend to enter container 2, thus pressing the content. In this case, the pressure exerted by presser 7 can be adjusted by appropriately inflating the cushion. Therefore, the adjustment means, configured for adjusting the insertion of presser 7 in container 2, will comprise the cushion, and preferably also the pump connectable thereto. In addition to the cushion, the previously described system of screws 10 may be included as well.

It is also possible to provide a kit for the preparation of foods, including parts that the user can install or remove to configure the device for the desired use. The kit comprises:
- a container 2 having a bottom 3 and a lateral surface 4,
- a grid 6 adapted to be removably placed into container 2,
- a cover 8 for closing container 2 with grid 6 therein,
- a presser 7 adapted to be mounted to cover 8 for pressing a content in container 2,
- adjustment means configured for adjusting the insertion of presser 7 in container 2

The kit is characterized in that the adjustment means are also adapted to adjust the closing action of the cover (8) onto the container (2), and to close such cover (8).

The kit may comprise one or more of the optional elements or means already mentioned above with reference to device 1. For brevity, the characteristics of the various elements already mentioned above will not be repeated. Conveniently, the kit also includes supporting member 9, which in the example is integral with grid 6. In the preferred embodiment, the kit also includes the enclosure (e.g. lateral panels 12, base 14) and, conveniently, its fastening means.

Preferably, the kit includes the returning means, particularly the elastic means, in the example, spring 36. Conveniently, the kit includes valve 30. Preferably, the kit includes gasket 32. The kit may include perforated cap 40. The kit may include a tool, e.g. an Allen wrench or a screwdriver, for turning screws 10.

The kit can thus be used for assembling device 1, which can then be used for preparing foods by curing (Fig. 2) or for preparing foods by fermentation (Fig. 4).

According to one possible variant, the kit includes the inflatable cushion adapted to be interposed between the enclosure and bottom 3. The kit may also include the pump for inflating the cushion.

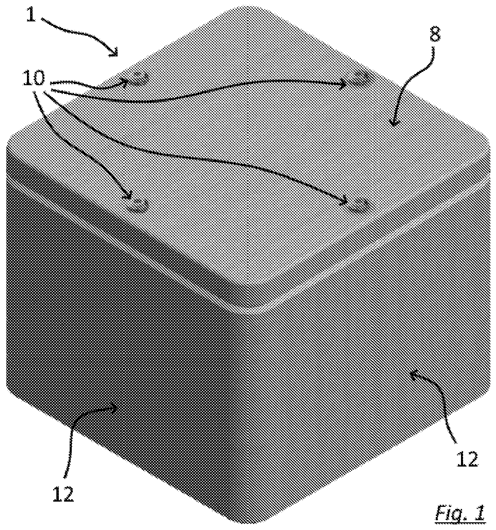

As shown in Fig. 1, the device is shaped as a cube or a parallelepipedon, even though different shapes are also possible.

The invention further concerns a method for the preparation of foods, comprising the following steps:
- providing a device 1 according to the invention,
- inserting the food together with salt into container 2 on grid 6,
- laying pressure piece 7, mounted to cover 8, on the content of container 2,
- exerting a first pressure on the content by means of presser 7,
- after a predefined time interval, adjusting the pressure exerted on the content by presser 7,
- extracting the food from container 2.

Preferably, the step of adjusting the pressure exerted on the content by presser 7 is executed a number of times, at user-defined time intervals; for example, every 6, 12 or 24 hours. The user adjusts the pressure through the adjustment means. The combined action of salt and pressure causes liquids to come out of the food, thus reducing the volume of the content. It is therefore necessary to restore the pressure exerted on the content by operating the adjustment means.

In particular, the content fills up container 2. Conveniently, the content (food and salt) reaches the upper edge of container 2. The content may include food, salt and, optionally, other dressings (e.g. spices). The food may be meat, fish or vegetables. As a non-limiting example, the weight of the food generally ranges from 300 to 1,500 grams.

Since salt and pressure extract liquids from the food, the level of the content in container 2 will lower and, as a consequence, the pressure exerted by the presser 7 will decrease. Therefore, it will be necessary to increase such pressure to bring it back to appropriate levels; to do so, the user must operate the adjustment means to push presser 7 towards the inside of container 2. The liquids extracted from the food are collected on bottom 3, under th grid 6.

When presser 7 is acting upon the content, particularly during the initial preparation step, gas may be allowed to flow between container 2 and the outside environment. This is due, for example, to the fact that cover 8 is not closing container 2, and presser 7 is not necessarily designed to seal container 2. In the example of Fig. 3, cover 8 closes container 2 by resting on its top edge 24, and between presser 7 and lateral surface 4 of container 2 there is a circumferential gap 25 allowing gas to flow through. In the example, presser 7 is not configured for ensuring fluid tightness of container 2.

Cover 8 is preferably adapted to assume a closing position in which it closes container 2, particularly while ensuring fluid tightness. In the example, the adjustment means are adapted to bring cover 8 into such closing position.

Preferably, there is a step of cooling device 1 and the content thereof, e.g. by putting device 1 in a refrigerator. The cooling temperature preferably ranges from 2°C to 10°C, in particular from 4°C to 8°C. Cooling times preferably range from 12 to 60 hours.

Immediately after the content (food and salt) has been placed into device 1, said device 1 is cooled to and kept at the appropriate temperature. Optionally, device 1 can be removed from the refrigerated environment for short periods of time in order to adjust the pressure exerted by presser 7. For example, a user who is using the device at home will fill up device 1, put it in the refrigerator, and remove it from time to time solely for adjusting the pressure of presser 7. Therefore, the method includes the step of keeping device 1 and the content thereof at a cooling temperature. Advantageously, cooling also improves the hygiene of the process.

Optionally, the following steps are carried out after the step of cooling device 1 and the content thereof:
- extracting the content from container 2,
- removing the salt and any dressing from the food (in particular, meat),
- executing a seasoning step, wherein the food is kept at a temperature below room temperature, e.g. by putting the food in a refrigerator.

The temperature of this second seasoning step is preferably in the range of 2°C to 10°C, in particular 4°C to 8°C. Seasoning time may range between 6 and 24 hours, preferably 12 hours. In this step, as aforesaid, the food is kept at low temperature with neither salt nor dressings.

Conveniently, before eating the food, the latter is left at room temperature (e.g. 20-25 °C) for about one hour.

As far as meat or fish are concerned, the food is preferably placed on grid 6. For vegetables, instead, the food is preferably, but not necessarily, placed under grid 6, which exerts additional pressure.

The following will describe, by way of non-limiting example, a method of preparation of a particular type of meat. The steps include:
- taking a top round cut with no streak or fat, having a weight of 600 to 1,200 grams,
- tying the top round cut with a string,
- separately preparing a blend of spices, fine salt and sugar, in quantities specified in the recipe based on the weight of the top round cut,
- enveloping the top round cut with the blend of spices, fine salt and sugar,
- coating grid 6 with a layer of salt approximately 1cm thick,
- positioning the spiced top round cut inside container 2 and coating it with an additional layer of salt until container 2 is full,
- enclosing the preparation with cover 8, exerting a first pressure,
- increasing the closing pressure of cover 8 at time intervals of approximately 12 hours,
- putting device 1, with the preparation therein, in the refrigerator for 2 or 3 days,
- opening device 1 and removing the preparation, cleaning it from residual salt,
- the meat is now ready to be served, and optionally dressed as desired.

The following will describe some illustrative recipes, wherein device 1 is used for curing purposes. The foods are introduced into container 2 together with salt any optional dressing, so as to fill container 2 up to its upper edge. The hours of permanence of device 1, with its content, in the refrigerator are also specified.
- Meat. In particular, beef is used, more specifically top round. The beef meat is conveniently cut for roast beef preparation. Conveniently, the meat has no streak or fat. The piece of meat can be tied with a suitable food-grade string.

Example 1: 1,200-1,300 grams of meat, size: ca. 12 cm x 12 cm x 9-10 cm; 60 hours in refrigerator.

Example 2: 800-1,000 grams of meat, size: ca. 9 cm x 9 cm x 7-8 cm; 54 hours in refrigerator.

Example 3: 500-600 grams of meat, size: ca. 7 cm x 7 cm x 5-6 cm; 48 hours in refrigerator.
- Slice of tuna fish.

Example 4: 900-1,000 grams of tuna fish, size: ca. 11 cm x 11 cm x 10 cm; 38 hours in refrigerator.

Example 5: 400-500 grams of tuna fish, size: ca. 6 cm x 6 cm x 7 cm; 24 hours in refrigerator.
- Salmon steak.

Example 6: 400-500 grams of salmon, size: ca. 6 cm x 6 cm x 7 cm; 12 hours in refrigerator.

By means of the invention it is possible to prepare many meat and fish dishes, e.g. very similar to the "carne salada" (salted meat) from Trentino. However, the product obtained from the invention differs from other similar products in fragrance, organoleptic properties, freshness and consistency. This is made possible by a transformation process that lasts only a few days, unlike known processes that require some weeks of preparation as well as adequate spaces, seasoning cellars and long curing times.

The process carried out by device 1 can be defined as "energyless cooking", since cooking occurs only through salt and pressure. This process achieves the extraction of liquids from the food within a shorter time than required by a simple drying process, which would take several weeks.

## Claims

1. Device (1) for the preparation of foods, comprising:
- a container (2) having a bottom (3) and a lateral surface (4),
- a grid (6) adapted to be removably placed into the container (2),
- a cover (8) for closing the container (2) with the grid (6) therein,
- a presser (7) coupled to the cover (8) for pressing a content in the container (2),
- adjustment means configured for adjusting the insertion of the presser (7) in the container (2),
**characterized in that** the adjustment means are also adapted to adjust the closing action of the cover (8) onto the container (2), and to close such cover (8).

2. Device according to claim 1, wherein the presser (7) is mounted to the cover (8) in a fixed position.

3. Device according to any preceding claim, comprising an enclosure external to the container (2), and an inflatable cushion interposed between the bottom (3) of the container (2) and the enclosure.

4. Kit for the preparation of foods, comprising:
- a container (2) having a bottom (3) and a lateral surface (4),
- a grid (6) adapted to be removably placed into the container (2),
- a cover (8) for closing the container (2) with the grid (6) therein,
- a presser (7) adapted to be mounted to the cover (8) for pressing a content in the container (2),
- adjustment means configured for adjusting the insertion of the presser (7) in the container (2),
**characterized in that** the adjustment means are also adapted to adjust the closing action of the cover (8) onto the container (2), and to close such cover (8).

5. Kit according to claim 4, comprising:
- a supporting member (9) for keeping the grid (6) raised from the bottom (3),
- a valve (30) for selectively allowing gas to flow from the inside of the container (2) to an outside environment,
- a returning means for pushing the grid (6) towards the bottom (3) of the container (2).

6. Kit according to claim 4 or 5, wherein the presser (7) is adapted to be mounted to the cover (8) in a fixed position.

7. Kit according to any claim from 4 to 6, comprising an enclosure external to the container (2), and an inflatable cushion adapted to be interposed between the bottom (3) of the container (2) and the enclosure.

8. Kit according to claim 7, comprising a pump for inflating the cushion.

9. Method for the preparation of foods, comprising the following steps:
- providing a device (1) according to any one of claims 1 to 3,
- inserting the food together with salt into the container (2) on the grid (6),
- laying the presser (7), mounted to the cover (8), on the content of the container (2),
- exerting a first pressure on the content by means of the presser (7),
- after a predefined time interval, adjusting the pressure exerted on the content by the presser (7),
- extracting the food from the container (2).

10. Method according to claim 9, wherein the step of adjusting the pressure exerted on the content by the presser (7) is executed several times.

11. Method according to claim 10 or 11, comprising the step of cooling the device (1) and the content thereof.

12. Method according to claim 11, wherein the following steps are carried out after the step of cooling the device (1) and the content thereof:
- extracting the content from the container (2),
- removing the salt and any dressing from the food,
- executing a seasoning step, wherein the food is kept at a temperature below room temperature.

13. Method according to any claim from 9 to 12, wherein the food is meat or fish.

## Patentansprüche

1. Vorrichtung (1) zur Zubereitung von Speisen, aufweisend:
- einen Behälter (2) mit einem Boden (3) und einer Seitenwand (4),
- ein Gitter (6), das so ausgelegt ist, dass es entnehmbar in den Behälter (2) eingesetzt werden kann,
- einen Deckel (8) zum Verschließen des Behälters (2) mit dem darin befindlichen Gitter (6),
- ein mit dem Deckel (8) verbundenes Presselement (7) zum Pressen eines Inhalts im Behälter (2),
- Einstellmittel, die zum Einstellen des Einführens des Presselements (7) in den Behälter (2) ausgebildet sind,
**dadurch gekennzeichnet, dass** die Einstellmittel zudem dazu ausgelegt sind, die Schließwirkung des Deckels (8) auf den Behälter (2) einzustellen und diesen Deckel (8) zu schließen.

2. Vorrichtung nach Anspruch 1, wobei das Presselement (7) in einer festen Position am Deckel (8) angebracht ist.

3. Vorrichtung nach einem der vorstehenden Ansprüche, aufweisend ein außerhalb des Behälters (2) angeordnetes Gehäuse und ein aufblasbares Kissen, das zwischen dem Boden (3) des Behälters (2) und dem Gehäuse angeordnet ist.

4. Set zur Zubereitung von Speisen, aufweisend:
- einen Behälter (2) mit einem Boden (3) und einer Seitenwand (4),
- ein Gitter (6), das entnehmbar in den Behälter (2) eingesetzt werden kann,
- einen Deckel (8) zum Verschließen des Behälters (2) mit dem darin befindlichen Gitter (6),
- ein Presselement (7), das an dem Deckel (8) befestigt werden kann, um den Inhalt des Behälters (2) zusammenzupressen,
- Einstellmittel, die zum Einstellen des Einsetzens des Presselements (7) in den Behälter (2) ausgebildet sind,
**dadurch gekennzeichnet, dass** die Einstellmittel zudem dazu ausgelegt sind, die Schließwirkung des Deckels (8) auf den Behälter (2) einzustellen und diesen Deckel (8) zu schließen.

5. Bausatz nach Anspruch 4, aufweisend:
- ein Stützelement (9) zum Halten des Gitters (6) in einem vom Boden (3) abgehobenen Zustand,
- ein Ventil (30) zum selektiven Durchlassen von Gas aus dem Inneren des Behälters (2) in die Außenumgebung,
- eine Rückstellvorrichtung zum Drücken des Gitters (6) in Richtung des Bodens (3) des Behälters (2).

6. Bausatz nach Anspruch 4 oder 5, wobei das Presselement (7) so ausgelegt ist, dass es in einer festen Position an dem Deckel (8) angebracht werden kann.

7. Bausatz nach einem der Ansprüche 4 bis 6, aufweisend ein außerhalb des Behälters (2) angeordnetes Gehäuse und ein aufblasbares Kissen, das dazu ausgelegt ist, zwischen dem Boden (3) des Behälters (2) und dem Gehäuse angeordnet zu werden.

8. Bausatz nach Anspruch 7, aufweisend eine Pumpe zum Aufblasen des Kissens.

9. Verfahren zur Zubereitung von Lebensmitteln, umfassend die folgenden Schritte:
- Bereitstellen einer Vorrichtung (1) gemäß einem der Ansprüche 1 bis 3,
- Einfüllen des Lebensmittels zusammen mit Salz in den Behälter (2) auf das Gitter (6),
- Auflegen des am Deckel (8) befestigten Presselements (7) auf den Inhalt des Behälters (2),
- Ausüben eines ersten Drucks auf den Inhalt mittels des Presselements (7),
- nach einem vordefinierten Zeitintervall den vom Presselement (7) auf den Inhalt ausgeübten Druck anzupassen,
- Entnehmen der Lebensmittel aus dem Behälter (2).

10. Verfahren nach Anspruch 9, wobei der Schritt des Einstellens des von dem Presselement (7) auf den Inhalt ausgeübten Drucks mehrmals durchgeführt wird.

11. Verfahren nach Anspruch 10 oder 11, umfassend den Schritt des Kühlens der Vorrichtung (1) und ihres Inhalts.

12. Verfahren nach Anspruch 11, wobei nach dem Schritt des Kühlens der Vorrichtung (1) und ihres Inhalts die folgenden Schritte durchgeführt werden:
- Entnahme des Inhalts aus dem Behälter (2),
- Entfernen des Salzes und etwaiger Würzmittel von den Lebensmitteln,
- Durchführung eines Würzschritts, bei dem das Lebensmittel auf einer Temperatur unterhalb der Raumtemperatur gehalten wird.

13. Verfahren nach einem der Ansprüche 9 bis 12, wobei es sich bei dem Lebensmittel um Fleisch oder Fisch handelt.

## Revendications

1. Dispositif (1) pour la préparation d'aliments, comprenant :
- un récipient (2) présentant un fond (3) et une surface latérale (4),
- une grille (6) adaptée pour être placée de manière amovible dans le récipient (2),
- un couvercle (8) pour fermer le récipient (2) avec la grille (6) à l'intérieur de celui-ci,
- un presseur (7) couplé au couvercle (8) pour presser un contenu dans le récipient (2),
- des moyens d'ajustement configurés pour ajuster l'insertion du presseur (7) dans le récipient (2),
**caractérisé en ce que** les moyens d'ajustement sont également adaptés pour ajuster l'action de fermeture du couvercle (8) sur le récipient (2), et pour fermer ce couvercle (8).

2. Dispositif selon la revendication 1, dans lequel le presseur (7) est monté sur le couvercle (8) dans une position fixe.

3. Dispositif selon l'une quelconque des revendications précédentes, comprenant une enceinte externe au récipient (2), et un coussin gonflable interposé entre le fond (3) du récipient (2) et l'enceinte.

4. Kit pour la préparation d'aliments, comprenant :
- un récipient (2) présentant un fond (3) et une surface latérale (4),
- une grille (6) adaptée pour être placée de manière amovible dans le récipient (2),
- un couvercle (8) pour fermer le récipient (2) avec la grille (6) à l'intérieur de celui-ci,
- un presseur (7) adapté pour être monté sur le couvercle (8) afin de presser un contenu dans le récipient (2),
- des moyens d'ajustement configurés pour ajuster l'insertion du presseur (7) dans le récipient (2),
**caractérisé en ce que** les moyens d'ajustement sont également adaptés pour ajuster l'action de fermeture du couvercle (8) sur le récipient (2), et pour fermer ce couvercle (8).

5. Kit selon la revendication 4, comprenant :
- un élément de support (9) pour maintenir la grille (6) surélevée par rapport au fond (3),
- une vanne (30) pour permettre à du gaz de s'écouler sélectivement depuis l'intérieur du récipient (2) vers un environnement extérieur,
- des moyens de rappel pour pousser la grille (6) vers le fond (3) du récipient (2).

6. Kit selon la revendication 4 ou 5, dans lequel le presseur (7) est adapté pour être monté sur le couvercle (8) dans une position fixe.

7. Kit selon l'une quelconque des revendications 4 à 6, comprenant une enceinte externe au récipient (2), et un coussin gonflable adapté pour être interposé entre le fond (3) du récipient (2) et l'enceinte.

8. Kit selon la revendication 7, comprenant une pompe pour gonfler le coussin.

9. Procédé de préparation d'aliments, comprenant les étapes suivantes consistant à :
- fournir un dispositif (1) selon l'une quelconque des revendications 1 à 3,
- insérer les aliments avec le sel dans le récipient (2) sur la grille (6),
- poser le presseur (7), monté sur le couvercle (8), sur le contenu du récipient (2),
- exercer une première pression sur le contenu par l'intermédiaire du presseur (7),
- après un intervalle de temps prédéfini, ajuster la pression exercée sur le contenu par le presseur (7),
- extraire les aliments à partir du récipient (2).

10. Procédé selon la revendication 9, dans lequel l'étape d'ajustement de la pression exercée sur le contenu par le presseur (7) est exécutée plusieurs fois.

11. Procédé selon la revendication 10 ou 11, comprenant l'étape de refroidissement du dispositif (1) et de son contenu.

12. Procédé selon la revendication 11, dans lequel les étapes suivantes sont effectuées après l'étape de refroidissement du dispositif (1) et de son contenu :
- extraire le contenu à partir du récipient (2),
- retirer le sel et toute sauce à partir des aliments,
- exécuter une étape d'assaisonnement, dans lequel les aliments sont maintenus à une température inférieure à la température ambiante.

13. Procédé selon l'une quelconque des revendications 9 à 12, dans lequel l'aliment est de la viande ou du poisson.
